# FASCICULE DE BREVET EUROPEEN

(11) **EP 4 035 945 B1**
(45) Date de publication et mention de la délivrance du brevet: **05.04.2023**
(21) Numéro de dépôt: 22153474.6
(22) Date de dépôt: 26.01.2022
(51) Int. Cl.: B60R 11/02, B60N 3/00, B64D 11/06

(54) **SIÈGE DE VÉHICULE, NOTAMMENT FERROVIAIRE, CAISSE DE VÉHICULE, NOTAMMENT FERROVIAIRE, COMPRENANT UN TEL SIÈGE ET VÉHICULE, NOTAMMENT FERROVIAIRE, COMPRENANT UNE TELLE CAISSE**
FAHRZEUGSITZ, INSBESONDERE FÜR SCHIENENFAHRZEUG, FAHRZEUGKAROSSERIE, INSBESONDERE EINES SCHIENENFAHRZEUGS, MIT EINEM SOLCHEN SITZ UND FAHRZEUG, INSBESONDERE SCHIENENFAHRZEUG, MIT EINER SOLCHEN KAROSSERIE
VEHICLE SEAT, IN PARTICULAR FOR A RAILWAY VEHICLE, VEHICLE BODY, IN PARTICULAR A RAILWAY VEHICLE BODY, COMPRISING SUCH A SEAT AND VEHICLE, IN PARTICULAR A RAILWAY VEHICLE, COMPRISING SUCH A BODY

(30) Priorité: 02.02.2021 FR 2100979
(43) Date de publication de la demande: 03.08.2022
(73) Titulaire: SpeedInnov, 75008 Paris (FR)
(72) Inventeur: PAILLER, Christophe, 17180 PERIGNY (FR); BEAUSEIGNEUR, Christophe, 17540 FONTPATOUR DE VERINES (FR)
(74) Mandataire: Lavoix

(56) Documents cités:
- EP-A1- 3 594 067
- WO-A1-2016/012693
- WO-A1-2016/140631
- US-A1- 2015 115 009

## Description

La présente invention concerne un siège pour passagers de véhicule, notamment ferroviaire, une caisse de véhicule, notamment ferroviaire, comprenant un tel siège pour passager et un véhicule, notamment ferroviaire, comprenant une telle caisse.

Dans le domaine du transport de passagers, notamment ferroviaire, il est connu de ménager un compartiment d'accueil des passagers dans lequel des sièges pour passager sont alignés les uns derrière les autres, le plus souvent parallèlement à une direction de déplacement du véhicule. Certains sièges se retrouvent ainsi derrière d'autres sièges et il est connu de ménager, à l'arrière du dossier d'un siège, une tablette à l'intention d'un passager assis derrière ce siège, pour que le passager puisse déposer sur cette tablette divers objets, notamment un appareil électronique comprenant un écran, tel qu'une tablette électronique ou un smartphone.

Il est connu de WO-2016/140631 -A1 de ménager des encoches parallèles sur toute la surface de la tablette pour caler un appareil électronique à la fois sur la tablette et sur la face arrière du dossier du siège situé devant, de manière que l'écran de l'appareil électronique reste orienté vers l'utilisateur. Une telle tablette limite cependant les possibilités d'utilisation. Par exemple il n'est pas possible d'écrire sur une feuille de papier posée sur cette tablette.

Il est aussi connu de EP-3 594 067-A1 de ménager des saillies parallèles dans une zone en creux d'une tablette, la zone en creux étant recouverte par un rabat pivotant. Les saillies et le rabat sont configurés pour maintenir un appareil électronique à la fois en appui sur le rabat en position ouverte et sur l'une des saillies. Un tel rabat est relativement fragile.

La publication EP-3 594 067-A1 divulgue un siège d'après le préambule de la revendication 1.

C'est à ces problèmes qu'entend plus particulièrement remédier l'invention, en proposant un siège pour passager comprenant une tablette qui soit plus pratique d'utilisation.

À cet effet, l'invention concerne un siège pour passagers de véhicule, notamment ferroviaire, le siège comprenant une assise reliée à un dossier, qui présente une face avant, orientée du côté de l'assise, et une face arrière opposée. Le siège comprend aussi une tablette, comprenant un plateau avec une face supérieure, la tablette étant montée sur la face arrière du dossier au moyen d'une charnière définissant un axe de charnière, de manière que le plateau est mobile en rotation par rapport au dossier autour de l'axe de charnière entre une position rangée, dans laquelle la face supérieure du plateau est orientée en regard de la face arrière du dossier, et une position ouverte, dans laquelle la surface supérieure de la tablette est orientée vers le haut, le plateau définissant une longueur, mesurée radialement à l'axe de charnière entre un bord interne et un bord externe du plateau. La face supérieure du plateau présente un relief de retenue, qui définit une profondeur mesurée orthogonalement à la face supérieure et qui est configuré pour empêcher le glissement d'objets posés sur la face supérieure du plateau. La face supérieure du plateau comprend une zone interne et une zone périphérique complémentaire, la zone interne s'étendant du rebord interne du plateau sur une distance inférieure à 80% de la longueur du plateau, de préférence inférieure à 50%. Le relief de retenue est ménagé sur la zone interne du plateau, tandis que la zone périphérique est sensiblement lisse et dépourvue de relief de retenue. Selon l'invention, la profondeur du relief de retenue décroit à mesure que le relief est éloigné de l'axe de charnière.

Grâce à l'invention, le relief de retenue ménagé sur la portion interne, empêche un appareil électronique, tel qu'un smartphone, reposant sur la tablette et mis en appui sur la face-arrière du siège dont fait partie la tablette, de glisser. D'autre part, la portion périphérique étant lisse, un passager assis sur le siège de derrière peut écrire sur une feuille de papier posée sur cette portion périphérique ou bien y déposer d'autres objets, tels qu'un gobelet ou une bouteille d'eau.

Selon des aspects avantageux mais non obligatoires de l'invention, un tel siège pour passager peut incorporer une ou plusieurs des caractéristiques suivantes prises selon toute combinaison techniquement admissible :
- la zone interne comprend une portion principale, située au voisinage du bord interne, et une portion de transition complémentaire de la portion principale, située entre la portion principale et la zone périphérique, alors qu'une portion du relief de retenue ménagée dans la portion principale présente une profondeur comprise entre 5 mm et 20 mm, et qu'une portion du relief de retenue ménagée dans la portion de transition présente une profondeur inférieure à 5 mm et qui décroit à mesure que le relief de retenue est éloigné de l'axe de charnière.
- Le plateau comprend une partie centrale et une partie périphérique complémentaire, la partie centrale étant mobile en rotation par rapport à la partie périphérique autour d'un axe de rotation confondu avec l'axe de charnière entre une position rangée, dans laquelle une face supérieure de la partie centrale est en regard de la face arrière du dossier, et une position ouverte, dans laquelle la face supérieure de la partie centrale est orientée vers le haut, alors que la face supérieure de la partie centrale est incluse dans la zone interne du plateau.

- La charnière est configurée de manière que lorsqu'un passager déplace la partie périphérique de sa position rangée vers sa position ouverte, la partie centrale est entraînée vers sa position ouverte, les surfaces supérieures des parties centrale et périphérique en position ouverte étant coplanaires, tandis que lorsqu'un utilisateur déplace la partie centrale de sa position repliée vers sa position ouverte, la partie périphérique n'est pas entraînée vers sa position ouverte.
- La face supérieure de la partie centrale est incluse dans la portion principale de la zone interne.
- Le relief de retenue présente une succession de bosses et de creux agencés selon un motif répétitif qui s'étendent suivant une direction sensiblement parallèle à l'axe de charnière.
- Deux bosses successives sont séparées d'une distance, mesurée radialement à l'axe de charnière, supérieure à 8 mm, de préférence supérieure à 10 mm, et inférieure à 40 mm, de préférence inférieure à 30 mm.

L'invention concerne également une caisse de véhicule, notamment ferroviaire, la caisse délimitant au moins un compartiment d'accueil de passagers dans lequel sont disposés des sièges pour passagers, au moins un des sièges étant tel que décrit précédemment.

L'invention concerne enfin un véhicule, notamment ferroviaire, comprenant au moins une caisse telle que décrite précédemment.

L'invention sera mieux comprise et d'autres avantages de celle-ci apparaitront plus clairement à la lumière de la description qui va suivre, de deux modes de réalisation d'un siège pour passager, d'une caisse de véhicule comprenant un tel siège et d'un véhicule comprenant une telle caisse, conformes à son principe, donnée uniquement à titre d'exemple et faite en référence aux dessins annexés, dans lesquels :
- [Fig. 1] la figure 1 est une coupe d'un véhicule de transport de passagers conforme à l'invention, comprenant une caisse et des sièges conformes à l'invention ;
- [Fig. 2] la figure 2 est une vue en perspective du détail Il sur la figure 1, comprenant un siège pour passager conforme à un premier mode de réalisation de l'invention ;
- [Fig. 3] la figure 3 est une vue à plus grande échelle du siège pour passagers de la figure 2, observée suivant la flèche III repérée sur la figure 2, et
- [Fig. 4] la figure 4 est une vue en perspective analogue à la figure 2, d'un siège pour passager conforme à un deuxième mode de réalisation de l'invention.

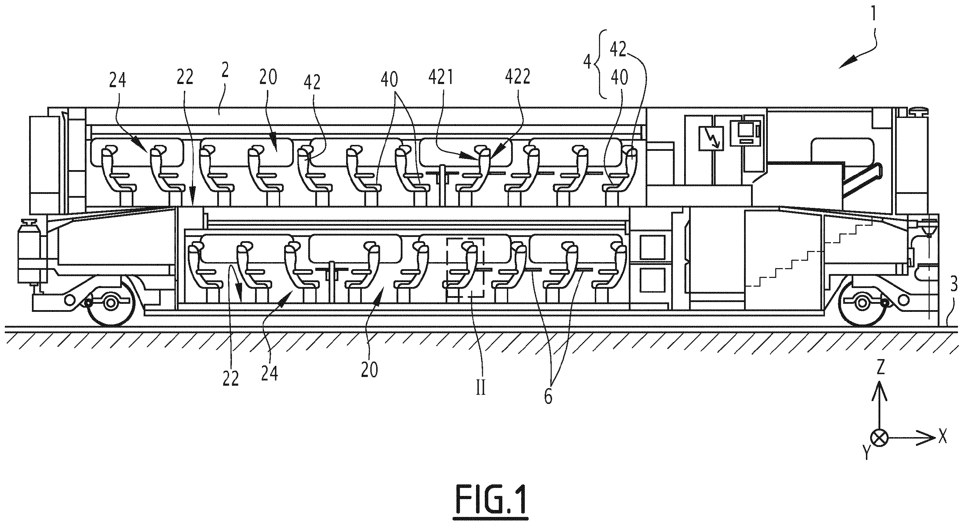

Un véhicule 1 est représenté sur la figure 1. Le véhicule 1 est un véhicule de transport de passagers, qui comprend une caisse 2 délimitant un compartiment 20 d'accueil de passagers. Dans l'exemple illustré, le véhicule 1 est un véhicule ferroviaire, destiné à circuler sur une voie ferrée 3. Plus particulièrement, le véhicule 1 est ici un train, qui comprend deux compartiments 20 superposés séparés par un plancher 22 intermédiaire. En variante non représentée, le train 1 peut être composé de plusieurs voitures, avec chacune une caisse 2. En variante non représentée, le véhicule 1 peut être un tramway, ou bien un véhicule routier tel qu'un autocar, un véhicule de transport aérien, voire encore un véhicule de transport maritime.

La caisse 2 du véhicule 1 est ici représentée posée sur les rails de la voie ferrée 3 et s'étend suivant une direction parallèle à un axe longitudinal de la caisse définissant un axe X. Par commodité, on définit aussi un axe Z comme étant un axe vertical, ainsi qu'un axe Y orienté de sorte que les axes X, Y et Z forment un repère orthonormé direct. L'axe Y définit une direction transversale de la caisse 2.

Dans la suite de la description, les références spatiales telles que haut, bas, horizontal, vertical, droite, gauche, etc., sont faites en référence à l'orientation du véhicule 1 sur les dessins, et ne préjugent pas d'un quelconque sens de fonctionnement des éléments décrits dans la réalité.

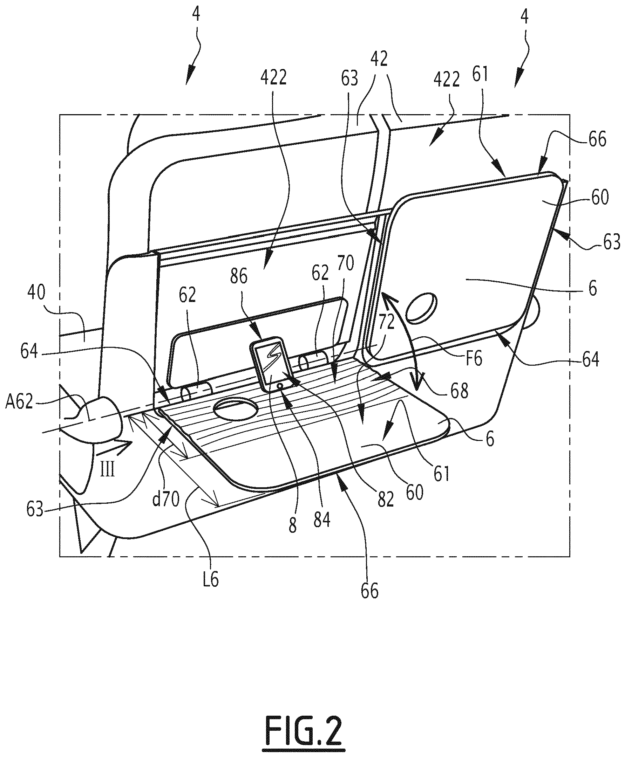

Chacun des compartiments 20 est délimité par un plancher 22, qui est ici horizontal, et des parois latérales 24, qui sont reliées au plancher 22. Le véhicule 1 comprend aussi des sièges 4 pour passagers, qui sont disposés dans chaque compartiment 20 et sont fixés à la caisse 2, par exemple fixés au plancher 22 et/ou à l'une des parois latérales 24. Pour des raisons de confort des passagers, les sièges 4 sont généralement alignés parallèlement à une direction de déplacement du véhicule 1, c'est-à-dire ici parallèlement à l'axe X. Chaque siège 4 définit un emplacement, généralement numéroté, destiné à accueillir un seul passager, en position assise. Un siège 4 peut ainsi être isolé, ou être intégré dans une banquette destinée à accueillir deux passagers, voire plus. Dans l'exemple illustré sur les figures 2 à 5, deux sièges 4 sont intégrés dans une banquette à deux places, la présente description étant bien entendu valable dans le cas d'un siège 4 isolé ou dans le cas de trois sièges 4 intégrés dans une même banquette, voire plus.

Chaque siège 4 comprend une assise 40 et un dossier 42, qui sont reliés suivant un axe transversal du siège 4. Dans l'exemple illustré, tous les sièges 4 sont alignés suivant l'axe X pour des raisons de confort des passagers, notamment lors des phases d'accélération ou de décélération du véhicule 1. La direction transversale de chaque siège 4 est parallèle à l'axe Y. Bien entendu, d'autres configurations sont possibles, même si généralement les sièges 4 sont alignés suivant la direction de l'axe X

Chaque dossier 42 présente une face avant 421, orientée du côté de l'assise 40 de ce siège 4, et une face arrière 422, orientée à l'opposé de la face avant 421. Lorsque l'on considère deux sièges 4 consécutifs, c'est-à-dire ici deux sièges 4 immédiatement voisins l'un de l'autre et alignés suivant la direction de l'axe X, les sièges 4 sont soit disposés en vis-à-vis, c'est-à-dire que les faces avant 421 des dossiers 42 de ces deux sièges 4 sont orientées en regard l'une de l'autre, soit disposés en opposition, c'est-à-dire que les faces avant 421 des deux dossiers 42 sont orientées à l'opposé l'une de l'autre, soit orientés dans le même sens, c'est-à-dire que les faces avant 421 des deux dossiers 42 sont orientées dans le même sens.

Lorsque deux sièges 4 sont orientés dans le même sens, celui des deux sièges 4 dont la face avant 421 est en regard de la face arrière 422 du dossier 42 de l'autre siège 4 est dit « siège arrière », tandis que l'autre siège 4 est dit « siège avant ». Ainsi un passager, assis dans un siège 4 arrière, est assis en regard de la face arrière 422 du dossier 42 du siège 4 avant situé devant lui.

Au moins un siège 4 avant comprend une tablette 6, montée sur la face arrière 422 de ce siège 4 avant, la tablette 6 étant à destination d'un passager assis sur le siège 4 arrière.

Sur la figure 1, les tablettes 6 représentées sont dans une position ouverte, dans laquelle la tablette 6 est globalement parallèle au plancher 22 du compartiment 20 dans lequel la tablette 6 se trouve. Le véhicule 1 étant ici représenté horizontal, chaque tablette 6 en position ouverte est ici horizontale, ou quasi-horizontale.

Sur la figure 2, deux tablettes 6 sont représentées, la tablette 6 sur la gauche de la figure 2 étant en position ouverte, tandis que la tablette 6 sur la droite de la figure 2 est dans une position dite « rangée », dans laquelle cette tablette 6 est parallèle à la face arrière 422 du dossier 42. Les tablettes 6 d'un même véhicule 1 fonctionnent toutes de la même façon et sont de préférence identiques les unes aux autres. Ainsi, ce qui est décrit pour la tablette 6 d'un des sièges 4 est aussi valable pour la tablette 6 des autres sièges 4 équipés de tablette.

Chaque tablette 6 comprend un plateau 60 avec une face supérieure 61. Chaque plateau 60 est monté sur la face-arrière 422 du dossier 42 d'un siège 4 au moyen d'une charnière 62, qui définit un axe de charnière A62 parallèle au plancher 22, c'est à dire ici horizontal. Chaque plateau 60 est ainsi mobile en rotation par rapport au dossier 42 autour de l'axe de charnière A62 correspondant, entre une position rangée, dans laquelle la face supérieure 61 est orientée en regard de la face arrière 422 du dossier 42 auquel le plateau 60 est fixé, et une position ouverte, dans laquelle la face supérieure 61 de ce plateau 60 est globalement parallèle au plancher 22 et orientée vers le haut. Le mouvement de rotation d'un plateau 60 autour de l'axe de charnière A62 entre les positions ouverte et rangée est représenté à la figure 2 par une double flèche F6, en arc de cercle centré sur l'axe A62 correspondant.

Chaque plateau 60 est par exemple réalisé en un matériau synthétique polymère, comprenant avantageusement des charges de renfort, sous forme de poudre et/ou de fibres. Les plateaux 60 sont produits, par exemple, par injection à chaud d'un ou plusieurs éléments assemblés les uns aux autres. Les charnières 62 sont de préférence réalisées en métal, par exemple en aluminium ou en acier.

Dans l'exemple illustré, les sièges 4 sont orientés suivant la direction longitudinale de la caisse 2 parallèlement à l'axe X, et chaque axe de charnière A62 est orienté parallèlement à la direction de l'axe Y.

La charnière 62 est configurée pour que la tablette 6 ne bouge que lorsqu'un utilisateur déplace le plateau 60. En particulier, le plateau 60 ne bouge pas sous l'effet de son propre poids ou sous l'effet des vibrations du véhicule 1 en déplacement.

Avantageusement, la charnière 62 comprend une butée, qui limite le débattement angulaire du mouvement du plateau 60 suivant la flèche F6. Le plateau 60 en position ouverte est ainsi en butée.

La face supérieure 61 de chaque plateau 60 présente ici une forme rectangulaire avec des angles arrondis, deux bords latéraux 63, qui sont orientés radialement à l'axe de charnière A62, et deux bords transversaux, qui sont parallèles à l'axe de charnière A62. On définit un bord interne 64 comme étant celui des deux bords transversaux le plus proche de l'axe de charnière A62, et un bord externe 66 comme étant l'autre rebord transversal. On définit une longueur L6 du plateau 60 comme étant une longueur, mesurée radialement à l'axe de charnière A62, entre le bord interne 64 et le bord externe 66 de ce plateau 60.

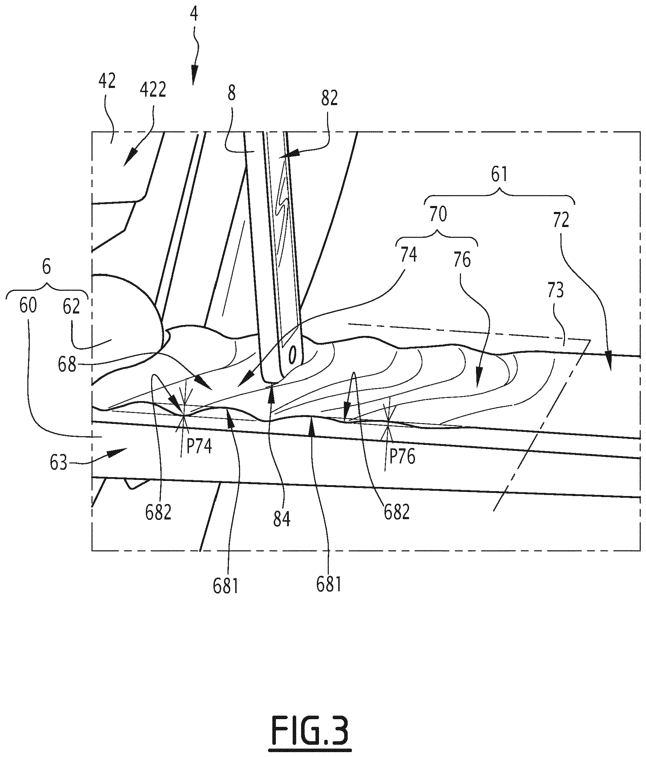

La face supérieure 61 de chaque plateau 60 présente un relief 68 de retenue, le relief 68 étant configuré pour empêcher le glissement d'objets posés sur la face supérieure 61 du plateau 60. Dans l'exemple illustré sur les figures 2 et 3, un appareil électronique 8, ici un smartphone, est représenté pour expliquer le fonctionnement de l'invention, sans toutefois faire partie du siège 4.

De façon générale, les appareils électroniques 8 représentés sur les figures ont une forme de parallélépipède aplati, avec une face avant, dans laquelle est ménagé un écran 82, et une face arrière opposée, la face avant et la face arrière étant reliées entre elles par un contour comprenant un bord inférieur 84 en appui sur le plateau 60 et un bord supérieur 86 opposé au bord inférieur 84. Dans l'exemple illustré aux figures 2 et 3, le bord inférieur 84 coopère avec le relief de retenue 68, tandis que le bord supérieur 86 est en appui sur la face arrière 422 du dossier 42 du siège 4 correspondant, de manière que l'écran 82 est orienté vers le passager assis en regard de la face arrière 422 du dossier 42 du siège 4, sur le siège 4 situé en arrière.

Le relief de retenue 68 empêche ainsi que le bord inférieur 84 de l'appareil électronique 8 ne glisse en direction de l'un des bords externe 66 ou interne 64 du plateau 60.

Dans l'exemple illustré, le relief 68 de retenue présente une succession de bosses 681 et de creux 682 agencés selon un motif répétitif qui s'étendent suivant une direction sensiblement parallèle à l'axe de charnière A62. Les bosses 681 et les creux 682 forment ici un profil sinusoïdal. Selon d'autres exemples non limitatifs, le relief 68 présente un profil en créneaux, ou bien en cycloïde.

La face supérieure 61 du plateau 60 comprend une zone interne 70 et une zone périphérique 72, complémentaire de la zone interne 70. Le relief de retenue 68 est ménagé dans la zone interne 70 de la face supérieure 61, tandis que la zone périphérique 72 présente une surface sensiblement lisse et préférentiellement plane. Par « sensiblement lisse », on entend que la zone périphérique 72 est dépourvue de bosses et de creux du type des parties 681 et 682 et présente une rugosité suffisamment faible, de manière qu'un passager peut écrire facilement sur une feuille de papier posée sur la zone périphérique 72. La rugosité d'une surface lisse est inférieure à 0,1 mm, de préférence inférieure à 50 µm.

La zone périphérique 72 définit un plan moyen 73. Avantageusement, les bosses 681 de la zone interne 70 sont affleurantes avec le plan moyen 73, c'est-à-dire que le relief 68 est situé du même côté du plan moyen 73.

Ainsi un objet rigide plat, tel qu'un ordinateur, posé sur le plateau 60 à cheval sur les zones interne 70 et périphérique 72, est posé de façon stable.

La zone interne 70 s'étend du bord interne 64 sur une distance d70, mesurée radialement à l'axe de charnière A62, inférieure à 80% de la longueur L6 de la tablette 6, de préférence inférieure à 50%.

Ainsi, les reliefs 68 sont ménagés dans la zone interne 70 à proximité de l'axe de charnière A62, et ne s'étendent pas sur l'ensemble de la face supérieure 61 de la tablette 6. Le passager dispose ainsi, sur le plateau 60, d'une surface lisse et plate formée par la zone périphérique 72, lui permettant notamment d'écrire sur une feuille posée sur cette surface ou de poser d'autres objets, qui ne seraient pas stables s'ils étaient posés directement sur le relief de retenue 68. Une telle tablette 6 avec deux zones interne 70 et périphérique 72 distinctes est plus pratique d'utilisation que les tablettes de l'art antérieur.

La zone interne 70 comprend elle-même une portion principale 74 et une portion de transition 76. La portion principale s'étend à proximité du bord interne 64 parallèlement à l'axe de charnière A62, tandis que la portion de transition 76 est située entre la portion principale 74 et la zone périphérique 72. Le relief 68 ménagé dans le plateau 60 présente, en projection dans un plan orthogonal à l'axe de charnière A62, une succession de creux et de bosses. On définit ainsi une profondeur P74 comme étant une profondeur, mesurée orthogonalement à la face supérieure 61 de la tablette 6, entre une bosse 681 et un creux 682 voisins du relief de retenue 68 dans la portion principale 74. De manière analogue on définit une profondeur P76 comme étant une profondeur, mesurée orthogonalement à la face supérieure 61 de la tablette 6, entre une bosse 681 et un creux 682 voisins du relief 68 de la portion de transition 76.

Dans la portion principale 74, le relief 68 présente une profondeur P74 suffisante pour éviter le glissement d'un appareil électronique 8 reposant sur la portion principale 74. Ainsi, la profondeur P74 du relief 68 de la portion principale 74 est supérieure à 5 mm, de préférence supérieure à 10 mm.

D'autre part, un relief 68 trop profond serait peu pratique d'utilisation, notamment difficile à nettoyer et/ou inesthétique. Ainsi, la profondeur P74 du relief de retenue 68 est inférieure à 20 mm, de préférence inférieure à 15 mm.

Dans l'exemple illustré, la profondeur P74 est constante sur l'ensemble de la portion principale 74. En variante non représentée, la profondeur P74 varie en fonction de l'emplacement sur la portion principale 74, par exemple diminue à mesure que l'on s'éloigne de l'axe de charnière A62, ou bien diminue à mesure que l'on se rapproche des bords latéraux 63.

La profondeur P76 du relief de retenue 68 de la portion de transition 76 est ici inférieure à la profondeur P74, permettant par exemple d'y caler de petits objets, tels qu'un stylo, et d'offrir une transition entre la portion principale 74 et la zone périphérique 72, ce qui est visuellement plus esthétique. Préférentiellement, la profondeur P76 du relief de retenue dans la portion de transition 76 varie de façon continue, et décroit à mesure que l'on s'éloigne de l'axe charnière A62.

Dans l'exemple illustré, la profondeur P76 est comprise entre 1 mm et 5 mm, de préférence comprise entre 3 mm et 4 mm.

Dans la portion principale 74, les bosses 681 sont suffisamment espacées pour permettre de poser un appareil électronique 8 dans le creux 682 situé entre deux bosses 681 successives. Ainsi deux bosses 681 successives sont séparées d'une distance, mesurée radialement à l'axe de charnière A62, supérieure à 8 mm, de préférence supérieure à 10 mm.

À l'inverse, si les bosses 681 sont trop espacées, il est difficile de positionner l'appareil électronique 8 de manière satisfaisante pour que l'écran 82 soit orienté vers le passager assis sur le siège 4 de derrière, quelle que soit la morphologie de ce passager. Ainsi deux bosses 681 successives sont séparées d'une distance, mesurée radialement à l'axe de charnière A62, inférieure à 40 mm, de préférence inférieure à 30 mm.

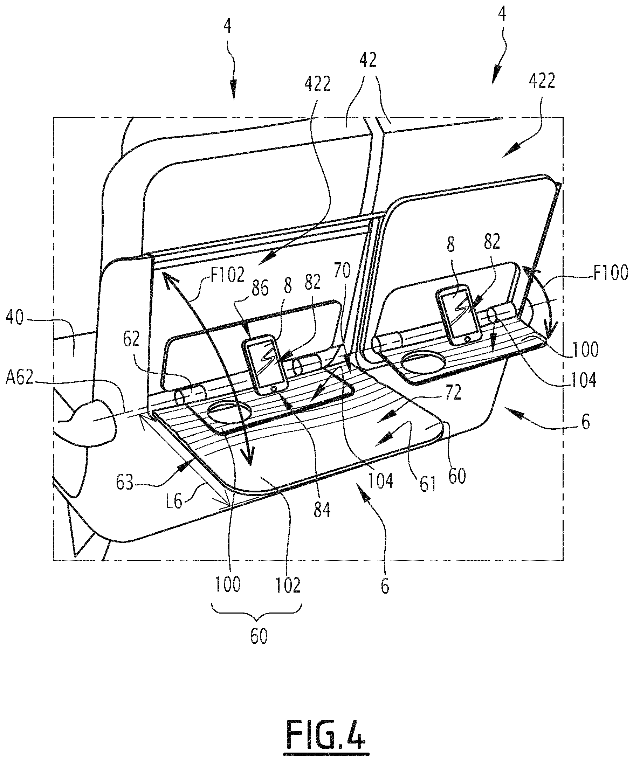

Un deuxième mode de réalisation du siège 4 est représenté sur la figure 4. Dans le deuxième mode de réalisation, les éléments analogues à ceux du premier mode de réalisation portent les mêmes références et fonctionnent de la même façon. Dans ce qui suit, on décrit principalement les différences entre les premiers et deuxièmes modes de réalisation.

Le plateau 60 du deuxième mode de réalisation comprend une partie centrale 100 et une partie périphérique 102 complémentaire de la partie centrale 100. La partie périphérique 102 fonctionne comme le plateau 60 du premier mode de réalisation, c'est-à-dire que la partie périphérique 102 est fixée au dossier 42 au moyen de la charnière 62 et est mobile en rotation par rapport au dossier 42 autour de l'axe de la charnière A62, le mouvement de la partie périphérique 102 étant représenté à la figure 4 par une double flèche F102 en arc de cercle, centrée sur l'axe de charnière A62.

La partie centrale 100, spécifique au deuxième mode de réalisation, présente une forme de rectangle allongé, disposé dans sa longueur parallèlement à l'axe de charnière A62 et mobile en rotation par rapport à la partie périphérique 102 autour d'un axe de rotation confondu avec l'axe de charnière A62, entre une position ouverte, dans laquelle une face supérieure 104 de la partie centrale 100 est orientée vers le haut et globalement parallèle au plancher 22, et une position rangée, dans laquelle la face supérieure 104 est située en regard de la face arrière 422 du dossier 42. Le mouvement de rotation de la partie centrale 100 par rapport à la partie périphérique 102 est représenté à la figure 4 également par une double flèche F100, en arc de cercle centré sur l'axe de charnière A62.

La charnière 62 comprend préférentiellement une butée, non représentée, qui limite le débattement angulaire du mouvement de rotation de la partie centrale 100 suivant la flèche F100, de manière que la partie centrale 100 est en butée lorsque cette partie centrale 100 est en position ouverte.

La charnière 62 est configurée pour que lorsque la partie centrale 100 et la partie périphérique 102 d'une même tablette 6 sont conjointement en position ouverte, les faces supérieures 104 et 61 des parties centrales 100 et périphériques 102 sont coplanaires et affleurantes.

Avantageusement, la face supérieure 104 de la partie centrale 100 est incluse dans la zone interne 70 de la tablette 6, c'est-à-dire que le relief de retenue 68 couvre l'ensemble de la face supérieure 104 de la partie centrale 100. Avantageusement, la face supérieure 104 de la partie centrale 100 est incluse dans la portion principale 74 de la zone interne 70. Autrement dit, le relief de retenue 68 ménagé dans la face supérieure 104 de la partie centrale 100 présente une profondeur comprise entre 5 mm et 20 mm, de préférence comprise entre 10 mm et 15 mm.

Lorsque la tablette 6 est en position rangée, c'est-à-dire que les parties centrale 100 et périphérique 102 sont conjointement en position rangée, un utilisateur peut déplacer la partie centrale 100 suivant la flèche F100 indépendamment de la partie périphérique 102. Autrement dit, la partie périphérique 102 n'est pas entrainée vers sa position ouverte lorsqu'un passager déplace la partie centrale 100 de sa position fermée vers sa position ouverte. Un passager peut ainsi utiliser seulement la partie centrale 100 en position ouverte, pour y poser un appareil électronique 8 tout en conservant de la place pour ses genoux, comme représenté sur la partie droite de la figure 4.

À l'inverse, la charnière 62 est configurée de manière que lorsqu'un passager déplace la partie périphérique 102 de sa position rangée vers sa position ouverte, la partie centrale 100 est également entrainée de sa position fermée vers sa position ouverte. Les surfaces supérieures 104 et 61 des parties centrales et périphériques 100 et 102 restent ainsi coplanaires au cours du mouvement de rotation autour de l'axe de charnière A62. Sur la partie gauche de la figure 4, la partie périphérique 102 et la partie centrale 100 sont conjointement en position ouverte, et le passager peut, outre l'appareil électronique 8, poser d'autres objets de son choix sur la tablette 6.

Les modes de réalisation et les variantes mentionnées ci-dessus peuvent être combinés entre eux pour générer de nouveaux modes de réalisation de l'invention.

## Revendications

1. Siège (4) pour passagers de véhicule (1), notamment ferroviaire, comprenant :
- une assise (40) reliée à un dossier (42), qui présente une face avant (421), orientée du côté de l'assise, et une face arrière (422) opposée,
- une tablette (6), comprenant un plateau (60) avec une face supérieure (61), la tablette étant montée sur la face arrière du dossier au moyen d'une charnière (62) définissant un axe de charnière (A62), de manière que le plateau (60) est mobile en rotation par rapport au dossier autour de l'axe de charnière entre une position rangée, dans laquelle la face supérieure (61) du plateau est orientée en regard de la face arrière (422) du dossier (42), et une position ouverte, dans laquelle la face supérieure de la tablette est orientée vers le haut, le plateau définissant une longueur (L6), mesurée radialement à l'axe de charnière entre un bord interne (64) et un bord externe (66) du plateau,
la face supérieure du plateau présentant un relief (68) de retenue, qui définit une profondeur (P74, P76) mesurée orthogonalement à la face supérieure et qui est configuré pour empêcher le glissement d'objets (8) posés sur la face supérieure du plateau,
dans lequel la face supérieure (61) du plateau comprend une zone interne (70) et une zone périphérique (72) complémentaire, la zone interne s'étendant du bord interne (64) du plateau sur une distance (d70) inférieure à 80% de la longueur (L6) du plateau, de préférence inférieure à 50%, et
dans lequel le relief de retenue (68) est ménagé sur la zone interne du plateau, tandis que la zone périphérique est sensiblement lisse et dépourvue de relief de retenue, **caractérisé en ce que** la profondeur (P74, P76) du relief (68) de retenue décroit à mesure que le relief est éloigné de l'axe de charnière (A62).

2. Siège (4) selon la revendication précédente, **caractérisé en ce que** la zone interne (70) comprend une portion principale (74), située au voisinage du bord interne (64), et une portion de transition (76) complémentaire de la portion principale, située entre la portion principale et la zone périphérique (72), **en ce qu'**une portion du relief de retenue (68) ménagée dans la portion principale (74) présente une profondeur (P74) comprise entre 5 mm et 20 mm, et **en ce qu'**une portion du relief de retenue ménagée dans la portion de transition (76) présente une profondeur (P76) inférieure à 5 mm et qui décroit à mesure que le relief de retenue est éloigné de l'axe de charnière (A62).

3. Siège (4) selon l'une quelconque des revendications précédentes, **caractérisé en ce que** le plateau (60) comprend une partie centrale (100) et une partie périphérique (102) complémentaire, la partie centrale étant mobile en rotation par rapport à la partie périphérique autour d'un axe de rotation confondu avec l'axe de charnière (A62) entre une position rangée, dans laquelle une face supérieure (104) de la partie centrale est en regard de la face arrière (422) du dossier (42), et une position ouverte, dans laquelle la face supérieure (104) de la partie centrale est orientée vers le haut, et **en ce que** la face supérieure (104) de la partie centrale est incluse dans la zone interne (70) du plateau (60).

4. Siège (4) selon la revendication précédente, **caractérisé en ce que** la charnière (62) est configurée de manière que lorsqu'un passager déplace la partie périphérique (102) de sa position rangée vers sa position ouverte, la partie centrale (100) est entraînée vers sa position ouverte, les faces supérieures (104, 61) des parties centrale (100) et périphérique (102) en position ouverte étant coplanaires, tandis que lorsqu'un utilisateur déplace la partie centrale (100) de sa position repliée vers sa position ouverte, la partie périphérique (102) n'est pas entraînée vers sa position ouverte.

5. Siège (4) selon l'une quelconque des revendications 3 ou 4 prises en combinaison avec la revendication 2, **caractérisé en ce que** la face supérieure (104) de la partie centrale (100) est incluse dans la portion principale (74) de la zone interne (70).

6. Siège (4) selon l'une quelconque des revendications précédentes, **caractérisé en ce que** le relief (68) de retenue présente une succession de bosses (681) et de creux (682) agencés selon un motif répétitif qui s'étendent suivant une direction sensiblement parallèle à l'axe de charnière (A62).

7. Siège (4) selon la revendication 6, **caractérisé en ce que** deux bosses (681) successives sont séparées d'une distance, mesurée radialement à l'axe de charnière (A62), supérieure à 8 mm, de préférence supérieure à 10 mm, et inférieure à 40 mm, de préférence inférieure à 30 mm.

8. Caisse (2) de véhicule (1), notamment ferroviaire, la caisse délimitant au moins un compartiment (20) d'accueil de passagers dans lequel sont disposés des sièges (4) pour passagers, **caractérisée en ce qu'**au moins un des sièges (4) est selon l'une quelconque des revendications précédentes.

9. Véhicule (1), notamment ferroviaire, de transport de passagers comprenant au moins une caisse (2), **caractérisé en ce que** la caisse (2) est selon la revendication précédente.

## Patentansprüche

1. Sitz (4) für Passagiere eines Fahrzeugs (1), insbesondere Eisenbahnfahrzeugs, umfassend:
- eine Sitzfläche (40), die mit einer Rückenlehne (42) verbunden ist, die eine Vorderseite (421), die der Seite der Sitzfläche zugewandt ist, und eine gegenüberliegende Rückseite (422) aufweist,
- ein Tablett (6), umfassend eine Platte (60) mit einer Oberseite (61), wobei das Tablett mittels eines Scharniers (62), das eine Scharnierachse (A62) definiert, an der Rückseite der Rückenlehne montiert ist, sodass die Platte (60) in Bezug auf die Rückenlehne um die Scharnierachse zwischen einer angeklappten Position drehbeweglich ist, in der die Oberseite (61) des Tabletts der Rückseite (422) der Rückenlehne (42) zugewandt ist, und einer offenen Position, in der die Oberseite des Tabletts nach oben gerichtet ist, wobei das Tablett eine Länge (L6) definiert, die radial zu der Scharnierachse zwischen einer Innenkante (64) und einer Außenkante (66) des Tabletts gemessen wird,
wobei die Oberseite des Tabletts ein Relief (68) zur Rückhaltung aufweist, die eine Tiefe (P74, P76) definiert, die orthogonal zu der Oberseite gemessen wird, und die konfiguriert ist, um das Verrutschen von Gegenständen (8) zu verhindern, die auf der Oberseite des Tabletts abgelegt werden,
wobei die Oberseite (61) der Platte einen inneren Bereich (70) und einen komplementären Umfangsbereich (72) umfasst, wobei sich der innere Bereich von der Innenkante (64) der Platte über eine Strecke (d70) von weniger als 80 % der Länge (L6) der Platte, vorzugsweise von weniger als 50 %, erstreckt, und
wobei das Rückhalterelief (68) auf dem inneren Bereich der Platte ausgebildet ist, während der Umfangsbereich im Wesentlichen glatt und ohne Rückhalterelief ist, **dadurch gekennzeichnet, dass** die Tiefe (P74, P76) des Rückhaltereliefs (68) abnimmt, je weiter das Relief von der Scharnierachse (A62) entfernt ist.

2. Sitz (4) nach dem vorherigen Anspruch, **dadurch gekennzeichnet, dass** der innere Bereich (70) einen Hauptabschnitt (74), der sich in der Nähe des inneren Randes (64) befindet, und einen Übergangsabschnitt (76), der komplementär zu dem Hauptabschnitt ist und sich zwischen dem Hauptabschnitt und dem Randbereich (72) befindet, umfasst, dass ein Abschnitt des Rückhaltereliefs (68), der in dem Hauptabschnitt (74) ausgebildet ist, eine Tiefe (P74) zwischen 5 mm und 20 mm aufweist, und dass ein Abschnitt des Rückhaltereliefs, der in dem Übergangsabschnitt (76) ausgebildet ist, eine Tiefe (P76) von weniger als 5 mm aufweist, die mit zunehmender Entfernung des Rückhaltereliefs von der Scharnierachse (A62) abnimmt.

3. Sitz (4) nach einem der vorherigen Ansprüche, **dadurch gekennzeichnet, dass** die Platte (60) ein Mittelteil (100) und ein komplementäres Umfangsteil (102) umfasst, wobei das Mittelteil in Bezug auf das Umfangsteil um eine Drehachse, die mit der Scharnierachse (A62) zusammenfällt, zwischen einer verstauten Position, in der eine Oberseite (104) des Mittelteils der Rückseite (422) der Rückenlehne (42) gegenüberliegt, und einer offenen Position, in der die Oberseite (104) des Mittelteils nach oben gerichtet ist, drehbeweglich ist, und dadurch, dass die Oberseite (104) des Mittelteils in dem inneren Bereich (70) der Platte (60) eingeschlossen ist.

4. Sitz (4) nach dem vorherigen Anspruch, **dadurch gekennzeichnet, dass** das Scharnier (62) konfiguriert ist, sodass, wenn ein Passagier das Umfangsteil (102) aus seiner verstauten Position in seine offene Position bewegt, das Mittelteil (100) in seine offene Position gezogen wird, wobei die Oberseiten (104, 61) des Mittelteils (100) und des Umfangsteils (102) in der offenen Position koplanar sind, während, wenn ein Benutzer das Mittelteil (100) aus seiner angeklappten Position in seine offene Position bewegt, das Umfangsteil (102) nicht in seine offene Position gezogen wird.

5. Sitz (4) nach einem der Ansprüche 3 oder 4 in Kombination mit Anspruch 2, **dadurch gekennzeichnet, dass** die Oberseite (104) des Mittelteils (100) in dem Hauptabschnitt (74) des inneren Bereichs (70) beinhaltet ist.

6. Sitz (4) nach einem der vorherigen Ansprüche, **dadurch gekennzeichnet, dass** das Rückhalterelief (68) eine Folge von Erhebungen (681) und Vertiefungen (682) aufweist, die in einem sich wiederholenden Muster angeordnet sind und sich in einer Richtung erstrecken, die im Wesentlichen parallel zu der Scharnierachse (A62) ist.

7. Sitz (4) nach Anspruch 6, **dadurch gekennzeichnet, dass** zwei aufeinanderfolgende Erhebungen (681) durch einen Abstand, gemessen radial zu der Scharnierachse (A62), von mehr als 8 mm, vorzugsweise mehr als 10 mm, und weniger als 40 mm, vorzugsweise weniger als 30 mm, voneinander getrennt sind.

8. Wagenkasten (2) eines Fahrzeugs (1), insbesondere eines Eisenbahnfahrzeugs, wobei der Wagenkasten mindestens ein Abteil (20) zur Aufnahme von Fahrgästen begrenzt, in dem Sitze (4) für Fahrgäste angeordnet sind, **dadurch gekennzeichnet, dass** mindestens einer der Sitze (4) gemäß einem der vorherigen Ansprüche ist.

9. Fahrzeug (1), insbesondere Schienenfahrzeug, zur Beförderung von Passagieren, umfassend mindestens einem Wagenkasten (2), **dadurch gekennzeichnet, dass** der Wagenkasten (2) gemäß dem vorherigen Anspruch ist.

## Claims

1. Seat (4) for passengers of a vehicle (1), in particular a railway vehicle, comprising:
- a seat (40) connected to a backrest (42), which has a front side (421) facing the seat and an opposite rear side (422),
- a shelf (6), comprising a tray (60) with an upper face (61), the shelf being mounted on the rear face of the backrest by means of a hinge (62) defining a hinge axis (A62), such that the tray (60) is rotatable relative to the backrest about the hinge axis between a stowed position in which the upper face (61) of the tray faces the rear face (422) of the backrest (42), and an open position, in which the upper face of the tray faces upwards, the tray defining a length (L6), measured radially to the hinge axis between an inner edge (64) and an outer edge (66) of the tray,
the top surface of the tray having a retaining relief (68), which defines a depth (P74, P76) measured orthogonally to the top surface and which is configured to prevent objects (8) placed on the top surface of the tray from sliding off,
wherein the top face (61) of the tray comprises an inner region (70) and a complementary peripheral region (72), the inner region extending from the inner edge (64) of the tray over a distance (d70) less than 80% of the length (L6) of the tray, preferably less than 50%, and
in which the retaining relief (68) is provided on the inner region of the plate, while the peripheral region is substantially smooth and free of retaining relief, **characterised in that** the depth (P74, P76) of the retaining relief (68) decreases as the relief is removed from the hinge axis (A62).

2. Seat (4) according to the preceding claim, **characterised in that** the internal zone (70) comprises a main portion (74), situated in the vicinity of the internal edge (64), and a transition portion (76) complementary to the main portion, situated between the main portion and the peripheral zone (72), **in that** a portion of the retaining relief (68) formed in the main portion (74) has a depth (P74) of between 5 mm and 20 mm, and **in that** a portion of the retaining relief formed in the transition portion (76) has a depth (P76) which is less than 5 mm and which decreases as the retaining relief is moved away from the hinge axis (A62).

3. Seat (4) according to any one of the preceding claims, **characterised in that** the tray (60) comprises a central part (100) and a complementary peripheral part (102), the central part being movable in rotation with respect to the peripheral part about an axis of rotation coincident with the hinge axis (A62) between a stowed position in which an upper face (104) of the central part faces the rear face (422) of the backrest (42), and an open position, in which the upper face (104) of the central part is oriented upwards, and **in that** the upper face (104) of the central part is included in the internal zone (70) of the tray (60).

4. Seat (4) according to the preceding claim, **characterised in that** the hinge (62) is configured such that when a passenger moves the peripheral portion (102) from its stowed position to its open position, the central portion (100) is driven to its open position, the upper faces (104, 61) of the central (100) and peripheral (102) portions in the open position being coplanar, whereas when a user moves the central portion (100) from its stowed position to its open position, the peripheral portion (102) is not driven to its open position.

5. Seat (4) according to any one of claims 3 or 4 taken in combination with claim 2, **characterised in that** the upper face (104) of the central part (100) is included in the main portion (74) of the inner area (70).

6. Seat (4) according to any one of the preceding claims, **characterised in that** the retaining relief (68) has a succession of bumps (681) and hollows (682) arranged in a repetitive pattern which extend in a direction substantially parallel to the hinge axis (A62).

7. Seat (4) according to claim 6, **characterised in that** two successive bumps (681) are separated by a distance, measured radially to the hinge axis (A62), greater than 8 mm, preferably greater than 10 mm, and less than 40 mm, preferably less than 30 mm.

8. Body (2) for a vehicle (1), in particular a railway vehicle, the body delimiting at least one passenger compartment (20) in which passenger seats (4) are arranged, **characterised in that** at least one of the seats (4) is according to any one of the preceding claims.

9. A vehicle (1), in particular a railway vehicle, for transporting passengers, comprising at least one body (2), **characterised in that** the body (2) is according to the preceding claim.
